# EUROPEAN PATENT APPLICATION

(11) **EP 2 239 663 A1**
(43) Date of publication of application: **13.10.2010**
(21) Application number: 09706966.0
(22) Date of filing: 14.01.2009
(51) Int. Cl.: G06F 11/00, H04N 7/173

(54) **DIGITAL BROADCAST RECEIVING DEVICE AND SOFTWARE DOWNLOAD METHOD**

(30) Priority: 28.01.2008 JP 2008016116
(71) Applicant: Panasonic Corporation, Kadoma-shi Osaka 571-8501 (JP)
(72) Inventor: TAKAGAKI, Keiichi, c/o Panasonic Corporation IPROC, Osaka-shi, Osaka 540-6207 (JP); KURODA, Tadashi,c/o Panasonic Corporation IPROC, Osaka-shi, Osaka 540-6207 (JP); MATSUNAGA, Shigeki,c/o Panasonic Corporation IPROC, Osaka-shi, Osaka 540-6207 (JP)
(74) Representative: Kügele, Bernhard
(86) International application number: PCT/JP2009/000096
(87) International publication number: WO 2009/096140

(57) **Abstract**

In a digital broadcast receiving apparatus and a method of downloading software, a power source control section allows a standby power source to be supplied and carries out downloading and software updating, regardless of an operation of a main power source switch, when download scheduled time information that has not been downloaded is stored in an SDL information storage section. Furthermore, after the software updating is completed, the power source control section stops a standby power source, and power source supply to the digital broadcast receiving apparatus is stopped similar to the case where the main power source is turned off by an operation of the main power source switch. Furthermore, when the supply from the external power source is stopped, a standby power source is supplied by using an incorporated charging battery.

## Description

### TECHNICAL FIELD

The present invention relates to a software updating function of a digital broadcast receiving apparatus with a broadcast signal. More particularly, the present invention relates to a digital broadcast receiving apparatus realizing a software updating function in conjunction with power source management and to a method of downloading software.

### BACKGROUND ART

Digital broadcast receiving apparatuses corresponding to terrestrial digital broadcasting service and BS digital satellite broadcasting service use a mechanism for updating software in the digital broadcast receiving apparatus by software download (hereinafter, abbreviated as "SDL") by multiplexing updating software to a received broadcast signal in order to update software for operating the apparatus main body if necessary. This software updating enables expansion of functions of a digital broadcast receiving apparatus and repair of malfunction of software.

Such software updating is generally carried out during not-viewing time because this software controls a basic function of the digital broadcast receiving apparatus and because broadcast wave for downloading generally belongs to a specific broadcasting station. That is to say, the software updating is carried out during standby of the digital broadcast receiving apparatus. This standby denotes a state in which a demodulation operation of a video audio signal and an image display and sound reproduction operation are stopped and only a part of the circuit for updating software is operated. In general, the standby of the digital broadcast receiving apparatus corresponds to a state in which the power source of the digital broadcast receiving apparatus is turned off by an operation of a remote controller, that is, a state in which a standby power source is turned on.

In order to reliably update software during standby, in digital broadcasting service, scheduled time information notifying a scheduled time of SDL is transmitted periodically. The digital broadcast receiving apparatus stores the scheduled time information of this software downloading inside the device. Then, at the scheduled time during the standby, a receiving function of updating software or a software updating function is operated.

On the other hand, in an operation of turning off a main power source of the digital broadcast receiving apparatus main body by a switching operation of the main power source, all the supply from the power source in the digital broadcast receiving apparatus is generally stopped. Therefore, at the time of the above-mentioned scheduled time, downloading by a broadcast signal cannot be carried out.

In order to solve this problem, a method of displaying a notice to a user that the main power source should not be shut down at the scheduled time, or displaying a notice to a user when the receiving apparatus is started next time in the case where the main power source is turned off at the scheduled time has been proposed (see, for example, patent documents 1 and 2).

In patent document 1, in the case of SDL for updating software having high importance, the scheduled time is displayed by superimposing the scheduled time on a screen to be viewed so as to urge a viewer to stop viewing broadcast or urge a viewer not to turn off the main power source. By doing so, a technology of carrying out SDL reliably is disclosed. It is proposed that displaying of notice be carried out when the main power source of a digital broadcast receiving apparatus is turned on and when the scheduled time is approaching during viewing time.

Furthermore, in patent document 2, when the main power source is turned off by a user during SDL, the operation of turning off is accumulated. Also, patent document 2 discloses a technology for displaying a notice for urging a user not to turn off the main power source when a digital broadcast receiving apparatus is started up next time. By this display of the notice, at the next download scheduled time, a user is expected to make a main power source be in a standby state without turning off the main power source.

The above-mentioned patent documents 1 and 2 display a notice to a user not to turn off the main power source or not to view broadcasting at the scheduled time with the use of a display screen of a digital broadcast receiving apparatus, thereby carrying out SDL reliably.

After all, however, both technologies expect a user to recognize the display and to execute an operation based on the display. Therefore, no assurance is given to a case in which a user does not become aware of the display of the notice or a case in which a user watches this notice but forgets it. Furthermore, some users consciously turn off the main power source by putting the priority on the power saving than updating depending upon user's sense of power-saving. Such a case cannot be handled.

Furthermore, in ordinary households, a power cord of a digital broadcast receiving apparatus may be unplugged, or the power source may be turned off collectively by using, for example, a power source tap. Furthermore, when the digital broadcast receiving apparatus is placed in offices, shops, or the like, external power source system may be turned on/off by a timer, or turned on/off by a breaker collectively. In such cases, even when a switch of the main power source of the digital broadcast receiving apparatus is turned on, an external power source is not supplied to the digital broadcast receiving apparatus itself, so that SDL and software updating cannot be executed naturally.
[Patent document 1] Japanese Patent Unexamined Publication No. 2006-287406
[Patent document 2] Japanese Patent Unexamined Publication No. 2007-201872

### SUMMARY OF THE INVENTION

A digital broadcast receiving apparatus of the present invention includes a receiving section, a first storage section, a second storage section, an update control section, an input section, a power source section, and a power source control section.

The receiving section receives software and download scheduled time information of the software. The first storage section stores the received download scheduled time information. The second storage section stores the received software. The update control section downloads software corresponding to the stored download scheduled time information and updates the software stored in the second storage section by using the downloaded software. The input section receives an input of an operation of turning off a main power source by a user. The power source section supplies a main power source or the standby power source. The power source control section controls the power source section so as to allow the power source section to supply the main power source or the standby power source and allow the update control section to carry out downloading of the software and update process of the software when the download scheduled time information that has not been downloaded is stored in the first storage section and when the input section detects an operation of turning off the main power source.

With such a configuration, even when a user of the digital broadcast receiving apparatus, that is, a viewer turns off the main power source switch in the sense of power-saving, downloading and software updating can be carried out at a scheduled time.

Furthermore, the digital broadcast receiving apparatus of the present invention further includes a power source display section lighting up or going off according to the operation of the main power source from the input section. The power source control section may allow the power source display section to go off when the download scheduled time information that has not been downloaded is stored in the first storage section and when the input section detects an operation of turning off the main power source.

With such a configuration, a main power source or a standby power for SDL can be supplied while an operational feeling that the power source display goes off is maintained by turning off the main power source switch as conventionally. As a result, it is possible to realize operation based on a user's sense of power-saving and reliable SDL during not-viewing time.

Furthermore, in the digital broadcast receiving apparatus of the present invention, the power source control section may allow the power source section to stop supply from the main power source or the standby power source after completion of downloading of the software and update process of the software.

With such a configuration, after a downloading operation of software and an updating operation of software which are necessary to the digital broadcast receiving apparatus are completed, it is possible to stop electric power consumption of the digital broadcast receiving apparatus as a user intends.

Furthermore, the digital broadcast receiving apparatus of the present invention further includes a charging battery, an external power source detection section, and a power source switching section. The power source section is supplied with a main power source or a standby power from the external power source.

The external power source detection section detects a stop of power source supply from the external power source. The power source switching section switches between power supply from the power source section and power supply from the charging battery.

The power source control section may allow the power source switching section to switch to power supply from the charging battery when the external power source detection section detects the stop of power source supply from the external power source.

With such a configuration, even when a power cord of the digital broadcast receiving apparatus may be unplugged, or the power source may be turned off collectively by using, for example, a power source tap, an downloading operation of software and a updating operation of software can be carried out by an incorporated charging battery.

Furthermore, in the digital broadcast receiving apparatus of the present invention, the update control section may download a part of the software according to the remaining amount of the charging battery, so that entire software may be downloaded at a plurality of times. Thus, in the large-scale software that requires a long time to be downloaded, SDL and software updating can be reliably carried out without excessively increasing the capacity of a charging battery.

Furthermore, a method of downloading software in accordance with the present invention includes the steps of: receiving, first storing, second storing, detecting, updating, and power source supply stopping.

The receiving step receives software and download scheduled time information of the software. The first storing step stores the received download scheduled time information. The second storing step stores the received software. The detecting step detects an operation of turning off a main power source by a user. The power supplying step supplies a main power source or a standby power source when the download scheduled time information that has not been downloaded is stored in the first storing step and when the operation of turning off the main power source is detected in the detecting step. The updating step downloads the software corresponding to the stored download scheduled time information that has not been downloaded, and updates the stored software by using the downloaded software. The power source supply stopping step stops supply from the main power source or the standby power source after completion of the updating of software in the updating.

The method of downloading software of the present invention further includes a power source displaying step of allowing the power source display to light up and go off according to an operation of the main power source.

The power supplying step may allow the power source display to go off in the power source displaying step when the download scheduled time information that has not been downloaded is stored in the first storing step and when the operation of turning off the main power source is detected in the detecting step.

Furthermore, in the method of downloading software in accordance with the present invention, the power source supplying step receives supply of the main power source or the standby power source from an external power source. The method further includes a stop detecting step of detecting a stop of power source supply from the external power source. The power source supplying step may switch to a power source supply from a charging battery when a stop of power source supply from the external power source is detected in the power source supplying step.

Furthermore, the method of downloading software in accordance with the present invention further includes a remaining capacity detecting step of detecting a remaining capacity of the charging battery detected in the remaining capacity detecting step. In the updating step, the updating step may carry out downloading of a part of software according to the remaining capacity of the charging battery and may carry out downloading of entire software at a plurality of times.

The present invention can provide a digital broadcast receiving apparatus capable of reliably carrying out the necessary SDL and software updating even when a user turns off a power source by using a main power source switch and a method of downloading software.

### BRIEF DESCRIPTION OF THE DRAWINGS

Fig. 1 is a block diagram showing a configuration of a digital broadcast receiving apparatus in accordance with a first exemplary embodiment of the present invention.
Fig. 2 shows a data configuration of SDL scheduled time information received by the digital broadcast receiving apparatus in accordance with the first exemplary embodiment of the present invention.
Fig. 3 is a flowchart showing registration process of SDL scheduled time information when the digital broadcast receiving apparatus receives SDL scheduled time information in accordance with the first exemplary embodiment of the present invention.
Fig. 4 is a flowchart showing power source control process when a user turns off a main power source in the digital broadcast receiving apparatus receives SDL scheduled time information in accordance with the first exemplary embodiment of the present invention.
Fig. 5 is a flowchart showing software update process based on the SDL scheduled time information in accordance with the first exemplary embodiment of the present invention.
Fig. 6 is a block diagram showing a configuration of a digital broadcast receiving apparatus in accordance with a second exemplary embodiment of the present invention.
Fig. 7 is a flowchart showing a flow of power source control process of the digital broadcast receiving apparatus in accordance with the second exemplary embodiment of the present invention.
Fig. 8 is a flowchart showing power source control process when a partial download of the digital broadcast receiving apparatus is carried out in accordance with the second exemplary embodiment of the present invention.

### REFERENCE MARKS IN THE DRAWINGS

- 10, 20: digital broadcast receiving apparatus
- 101: receiving section
- 102: separating section
- 103: audio decoding section
- 104: video decoding section
- 105: audio processing section
- 106: video processing section
- 107: synthesizing section
- 108: audio output section
- 109: video output section
- 110: control section
- 111: OSD control section
- 112, 133: power source control section
- 113: update control section
- 114: measurement section
- 115: SDL information storage section (first storage section)
- 116: software storage section (second storage section)
- 117: storage section
- 118: input section
- 119: power source
- 120: LED (power source display section)
- 130: charging battery
- 131: external power source detection section
- 132: power source switching section

### DETAILED DESCRIPTION OF THE PREFERRED EMBODIMENTS

Hereinafter, an exemplary embodiment of the present invention is described in detail with reference to drawings.

### (FIRST EXEMPLARY EMBODIMENT)

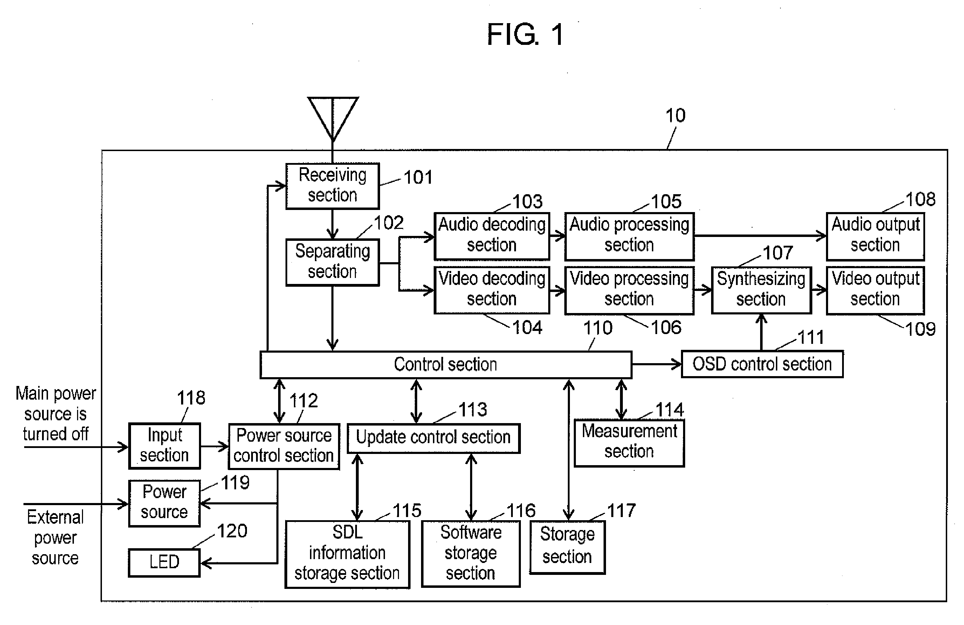

Fig. 1 is a block diagram showing a configuration of digital broadcast receiving apparatus 10 in accordance with a first exemplary embodiment of the present invention. Digital broadcast receiving apparatus 10 includes receiving section 101, separating section 102, audio decoding section 103, video decoding section 104, audio processing section 105, video processing section 106, synthesizing section 107, audio output section 108, video output section 109, control section 110, OSD (On Screen Display) control section 111, power source control section 112, update control section 113, measurement section 114, SDL information storage section 115 as a first storage section, software storage section 116 as a second storage section, storage section 117, input section 118, power source 119 as a power source section and LED (Light Emitting Diode) 120 as a power source display section.

Receiving section 101 receives a digital broadcast signal via an antenna based on a channel selection command from control section 110, subjects the received digital broadcast signal to radio frequency process and demodulation process, and outputs the signal as a transport stream to separating section 102.

Separating section 102 separates the transport stream input from receiving section 101 into MPEG data including a digital video signal and a digital audio signal and additional information such as program information, software to be updated and SDL scheduled time information of the software; and then, outputs the digital audio signal to audio decoding section 103, the digital video signal to video decoding section 104, and additional information to control section 110. Thus, in digital broadcast receiving apparatus 10, receiving section 101 receives software to be updated and download scheduled time information of the software.

Audio decoding section 103 decodes the digital audio signal input from separating section 102 and outputs an audio signal to audio processing section 105. Video decoding section 104 decodes the digital video signal input from separating section 102 and outputs a video signal to video processing section 106.

Audio processing section 105 carries out a predetermined adjustment process to the audio signal input from audio decoding section 103 and outputs the signal as audio data to audio output section 108. Video processing section 106 carries out a predetermined adjustment process to the video signal input from video decoding section 104 and outputs the signal as video data to synthesizing section 107. Synthesizing section 107 synthesizes the video data input from video processing section 106 and OSD display data input from OSD control section 111, and outputs the synthesized data as a video signal to video output section 109.

Audio output section 108 is an audio reproducing unit such as a loudspeaker, and outputs the audio signal input from audio processing section 105. Video output section 109 is a display device such as a monitor and, displays the video signal input from synthesizing section 107. Note here that digital broadcast receiving apparatus 10 in this exemplary embodiment incorporates audio output section 108 and video output section 109. However, when digital broadcast receiving apparatus 10 is, for example, STB (Set Top Box), a DVD recorder, PC (Personal Computer), and the like, audio output section 108 and/or video output section 109 as an external unit may be coupled to digital broadcast receiving apparatus 10. Then, digital broadcast receiving apparatus 10 may have a configuration in which an audio signal output from audio processing section 105 and/or a video signal output from synthesizing section 107 are/is output to an audio output unit and/or a video output unit as an external unit.

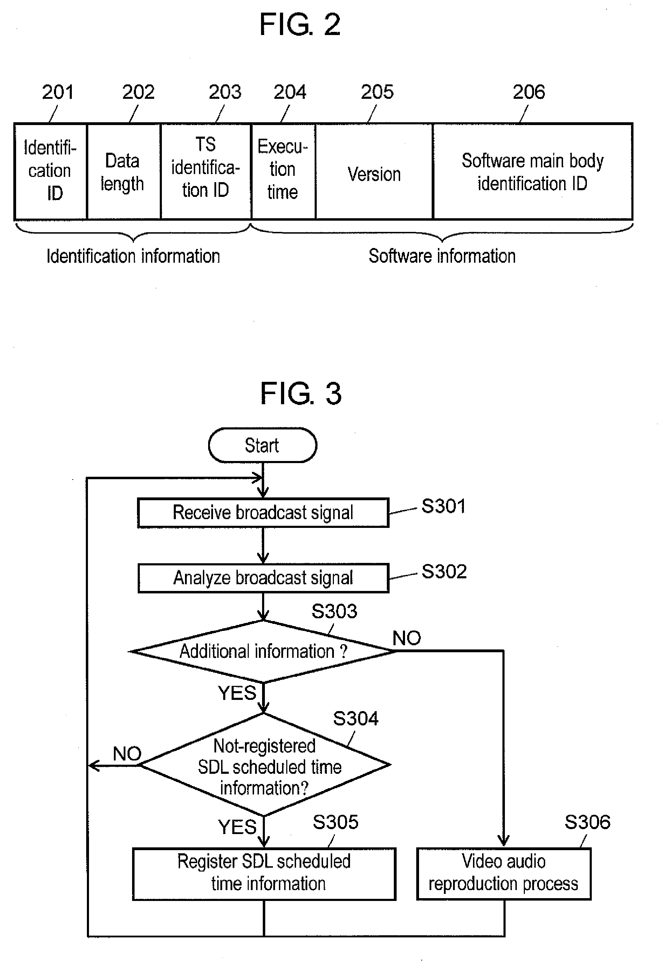

Control section 110 executes registration process of SDL scheduled time information when the SDL scheduled time information is input from separating section 102. The registration process of the SDL schedule is described in detail later with reference to Fig. 3. Furthermore, control section 110 outputs a power source state and the like input from power source control section 112 to storage section 117. In addition, control section 110 outputs measurement time input from measurement section 114 to update control section 113.

OSD control section 111 outputs program information data input from control section 110 as OSD display data to synthesizing section 107.

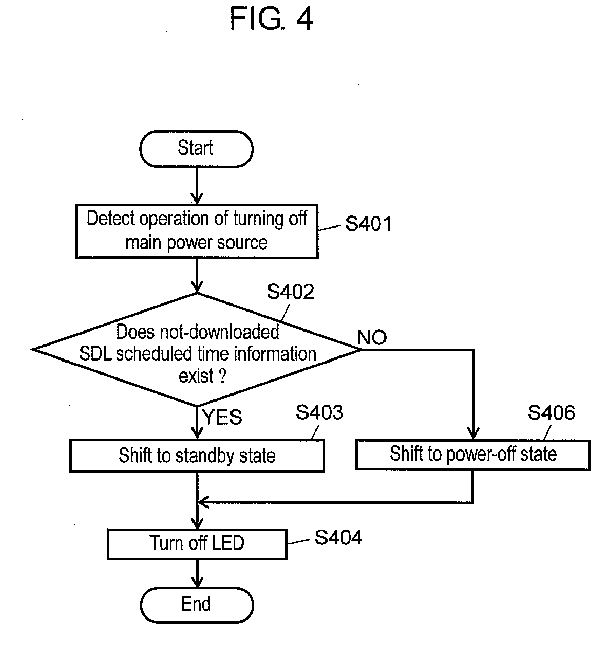

Power source control section 112 manages a power source state of digital broadcast receiving apparatus 10. Power source control section 112 executes power source control process when a command to turn off a main power source is input from input section 118. The power source control process is described in detail later with reference to Fig. 4.

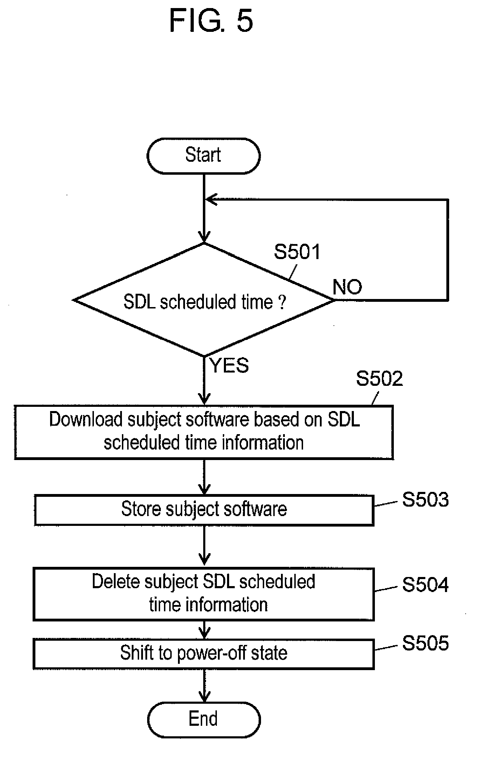

Update control section 113 executes software update process. The software update process is described in detail later with reference to Fig. 5.

Measurement section 114 measures a time and outputs the measured time to control section 110. SDL information storage section 115 as the first storage section stores the SDL scheduled time information input from update control section 113. The SDL scheduled time information to be stored may be only SDL scheduled time information that has not been downloaded or may be all the SDL scheduled time information that has been downloaded / not downloaded. When all the SDL scheduled time information that has been downloaded / not downloaded is stored, table-formed data, in which an identifier for identifying whether information is one that has been downloaded or one that has not been downloaded is added to the SDL scheduled time information, are stored. The SDL scheduled time information is described in detail later with reference to Fig. 2.

Software storage section 116 as the second storage section stores the software input from update control section 113. The software to be stored may be only the newest software. Also, software obtained by downloading may be stored based on a predetermined condition.

Storage section 117 stores program information input from control section 110. Furthermore, storage section 117 stores power source states (power-on state, standby state, and power-off state) and SDL states (SDL-waiting state, and SDL-completed state) input from control section 110.

Input section 118 outputs a command to turn off the main power source to power source control section 112 when a user turns off a main power source button provided on digital broadcast receiving apparatus 10. That is to say, input section 118 receives an input of an operation of the main power source by a user.

In the power-on state, power source 119 as the power source section obtains a driving power source of each section of digital broadcast receiving apparatus 10 from an external power source connected to a power source input terminal (not shown) and supplies a power source voltage as a main power source to each section of digital broadcast receiving apparatus 10. In the standby state, power source 119 supplies a power source voltage as a standby power source to receiving section 101, separating section 102, control section 110, update control section 113, SDL information storage section 115 and software storage section 116, which execute software update process. In the power-off state, the supply of power source voltage to each section of digital broadcast receiving apparatus 10 is stopped. That is to say, the power source section supplies a main power source or a standby power source.

LED 120 as the power source display section is a light-emitting element disposed in digital broadcast receiving apparatus 10 and lights up or goes off according to the operation of the main power source from input section 118. That is to say, LED 120 lights up in a predetermined first state in the power-on state, it lights up in a predetermined second state in the standby state, and it goes off in the power-off state.

Next, a data configuration of the SDL scheduled time information is described with reference to Fig. 2. The SDL scheduled time information, besides the software main body, is transmitted in a state in which it is multiplexed to the digital broadcast signal, prior to execution time of SDL. The SDL scheduled time information includes at least identification information for identifying SDL scheduled time information inside the transport stream and software information that is information regarding software to be downloaded.

In the identification information, at least identification ID 201 for identifying SDL scheduled time information, data length 202 of the SDL scheduled time information, and identification ID 203 of the transport stream (TS) including SDL scheduled time information are described.

In the software information, at least download execution time 204, version 205 of software to be downloaded, and software main body identification ID 206 for identifying a software main body to be downloaded are described.

Herein, a registration process of the SDL scheduled time information when digital broadcast receiving apparatus 10 receives the SDL scheduled time information shown in Fig. 2 is described with reference to a flowchart shown in Fig. 3. The registration process of the SDL scheduled time information shown in Fig. 3 is executed repeatedly when digital broadcast receiving apparatus 10 is in a power-on state.

Receiving section 101 receives a predetermined digital broadcast signal based on a channel selection command from control section 110 (step S301), and separating section 102 analyzes the received digital broadcast signal (step S302).

When the received digital broadcast signal is a digital video signal or a digital audio signal ("NO" in step S303), control section 110 executes video reproduction process using video decoding section 104 and the like, or audio reproduction process using audio decoding section 103 and the like (step S306).

On the other hand, when the received digital broadcast signal is additional information ("YES" in step S303), control section 110 determines whether or not the additional information is SDL scheduled time information that has not been registered in SDL information storage section 115 (step S304). As mentioned above, a receiving step of receiving software and download scheduled time information of the software is provided.

Specifically, firstly, with reference to a data configuration of the additional information, control section 110 determines whether the additional information is program information or SDL scheduled time information from the identification ID in the data. Then, when control section 110 determines that the additional information is SDL scheduled time information, SDL scheduled time information stored in SDL information storage section 115 is searched via update control section 113. Control section 110 determines that the received SDL scheduled time information has not been stored in SDL information storage section 115, that is, not-registered ("YES" in step S304), the received SDL scheduled time information is stored in SDL information storage section 115 (step S305). The above-mentioned step S305 is a first storing step of storing the received download scheduled time information.

Next, the power source control process when a user turns off the main power source is described with reference to Fig. 4.

When power source control section 112 detects an operation of turning off the main power source by a user through input section 118 (step S401), power source control section 112 obtains SDL scheduled time information from SDL information storage section 115 via control section 110 and update control section 113. Then, power source control section 112 determines whether or not SDL scheduled time information that has not been downloaded exists (step S402). When SDL scheduled time information that has not been downloaded does not exist ("NO" in step S402), power source control section 112 controls power source 119 to be in a power-off state and notifies control section 110 that power source 119 is in a power-off state (step S406).

On the other hand, when SDL scheduled time information that has not been downloaded exists ("Yes" in step S402), power source control section 112 controls power source 119 to be in a standby state and notifies control section 110 that power source 119 is in a standby state and an SDL-waiting state (step S403).

Then, after the state shifts to the power-off state (step S405) or to the standby state (step S403), power source control section 112 allows LED 120 to go off (step S404). As mentioned above, a power source display step of allowing the power source display to light up or goes off according to the operation of the main power source is further included. The power source supply step includes a step of allowing the power source display to go off when download scheduled time information that has not been downloaded is stored and when the operation of turning off the main power source is detected.

Finally, the software update process based on the SDL scheduled time information is described with reference to a flowchart shown in Fig. 5. The software update process assumes that digital broadcast receiving apparatus 10 is in a standby state and in an SDL-waiting state.

Update control section 113 compares the measured time input from control section 110 with execution time 204 in the SDL scheduled time information stored in SDL information storage section 115 and determines whether or not the SDL scheduled time comes (step S501).

When update control section 113 determines that the SDL scheduled time comes ("Yes" in S501), update control section 113 allows receiving section 101 to select channel of a digital broadcast signal specified by TS identification ID 203 in SDL scheduled time information stored in SDL information storage section 115 via control section 110 and downloads the subject software (step S502). Then, the downloaded software is stored in software storage section 116. That is to say, update control section 113 downloads the software corresponding to the stored download scheduled time information and updates software stored in the second storage section by using the downloaded software (step S503). This step is a second storing step for storing the received software. Then, the SDL scheduled time information corresponding to the subject software that has been downloaded is deleted from SDL information storage section 115 (step S504).

After the above-mentioned process, update control section 113 outputs a power source turning-off command to control section 110. Control section 110 outputs to storage section 117 that the state is in a power-off state and an SDL-complete state and controls power source control section 112 to be in a power-off state (step S505). This step is a power source supply stopping step of stopping the supply from the main power source or the standby power source after completion of update in an updating step.

As mentioned above, in accordance with the first exemplary embodiment of the present invention, it is possible to provide digital broadcast receiving apparatus 10 capable of reliably carrying out necessary SDL and software updating even when a user turns off a power source by operating a main power source switch. Furthermore, at this time, as conventionally, since LED 120 that is a power source display unit of the main power source switch is also turned off (which does not display that it is during standby), an operation feeling of a user is not lost. Furthermore, the supply from the external power source is completely stopped after SDL and software updating are finished. Therefore, similar to an operation of turning off the power source by a conventional main power source switch, it is possible to realize a state in which no standby electric power is consumed.

In this exemplary embodiment, the state shifts to a standby state when a user turns off the main power source. However, the power-on state may be maintained.

Furthermore, in this exemplary embodiment, a power source display is allowed to go off out when the download scheduled time information that has not been downloaded is stored and an operation of turning off the main power source is detected. However, without allowing the power source display to go off, a user may be notified that the main power source is not actually turned off by means of a screen display, an LED display, an audio display, and the like, until the completion of SDL.

Furthermore, in this exemplary embodiment, when scheduled time information that has not been downloaded is stored and when an operation of turning off the main power source is detected, a state automatically shifts to a standby state. However, a user may be allowed to select whether shifting to the standby state or turning off the main power source.

### (SECOND EXEMPLARY EMBODIMENT)

In digital broadcast receiving apparatus 10 in accordance with the first exemplary embodiment of the present invention, even if a user turns off the power source by a main power source switch, necessary SDL and software updating are possible. However, when a power cord of digital broadcast receiving apparatus 10 is unplugged from the outlet, or when the main power source is turned off collectively by using a power source tap, supply itself from the external power source to digital broadcast receiving apparatus 10 is not carried out. Therefore, SDL is not naturally executed. Furthermore, an example in which the supply from the external power source is stopped may include an example in which a digital broadcast receiving apparatus is placed in offices, shops, or the like, and an external power source system may be controlled to be on/off by a timer, or collectively turned on/off by a breaker. Then, digital broadcast receiving apparatus 20 in accordance with the second exemplary embodiment of the present invention incorporates a charging battery inside digital broadcast receiving apparatus 20 in order to keep on supplying the standby power source even when supply from the external power source itself is stopped.

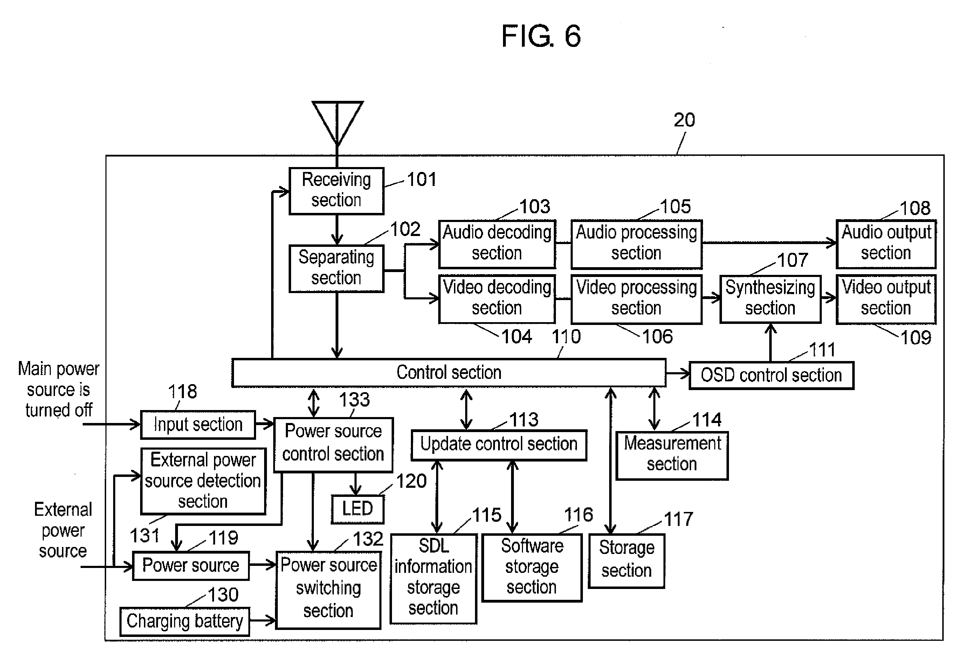

Fig. 6 is a block diagram showing a configuration of digital broadcast receiving apparatus 20 in accordance with the second exemplary embodiment of the present invention. Digital broadcast receiving apparatus 20 of the second exemplary embodiment is different from digital broadcast receiving apparatus 10 of the first exemplary embodiment in that digital broadcast receiving apparatus 20 further includes charging battery 130, external power source detection section 131 and power source switching section 132, and that a function of controlling external power source detection section 131 and power source switching section 132 is added to power source control section 133. Since the other configurations are the same as those in the first exemplary embodiment, the same reference numerals are given to the same configurations and description thereof is omitted herein.

Charging battery 130 is a battery for supplying a standby power source instead of power source 119 when supply from an external power source is stopped because a user unplugs a power cord or turns off the power source collectively by, for example, a power source tap. During the time when the external power source is supplied, charging is possible. In general, the state is kept in a full charge state.

When electric power of the standby power source is about 2 W, an operation by using a charging battery with capacity of 2 W-h (for example, 5 V, 400 mA-h) for one hour is possible. Furthermore, until the download scheduled time, only a clock function may be operated. Therefore, most of the electric power capacity of the charging battery can be assigned to an actual downloading operation and a storing operation of the received software.

When power source supply from the external power source is stopped because a user unplugs a power cord or turns off a power source collectively by, for example, a power source tap, external power source detection section 131 outputs a notification to power source control section 133 that an external power source is disconnected. Furthermore, when external power source detection section 131 detects the power source supply from the external power source, it outputs a notification to power source control section 133 that the external power source is supplied.

Power source switching section 132 receives a power source switching command from power source control section 133, and switches a supply source of the standby power source alternatively between power source 119 and charging battery 130. In general, power source 119 is selected. However, when external power source detection section 131 detects that the supply from the external power source is stopped, power source switching section 132 receives a power source switching command from power source control section 133 and switches a power supply source to charging battery 130.

Power source control section 133 manages not only the power source state of digital broadcast receiving apparatus 20 but also power supply source information. In this exemplary embodiment, power source control section 133 manages power supply source information as an "external power source" when power source 119 is a power supply source, and as an "internal power source" when charging battery 130 is power supply source. When a notification that the external power source is disconnected is input from external power source detection section 131, power source control section 133 makes the power supply source information be the "internal power source" and outputs a power source switching command to power source switching section 132. Furthermore, when a notification that the external power source is supplied is input from external power source detection section 131, power source control section 133 makes the power supply source information be the "external power source" and outputs a power source switching command to power source switching section 132.

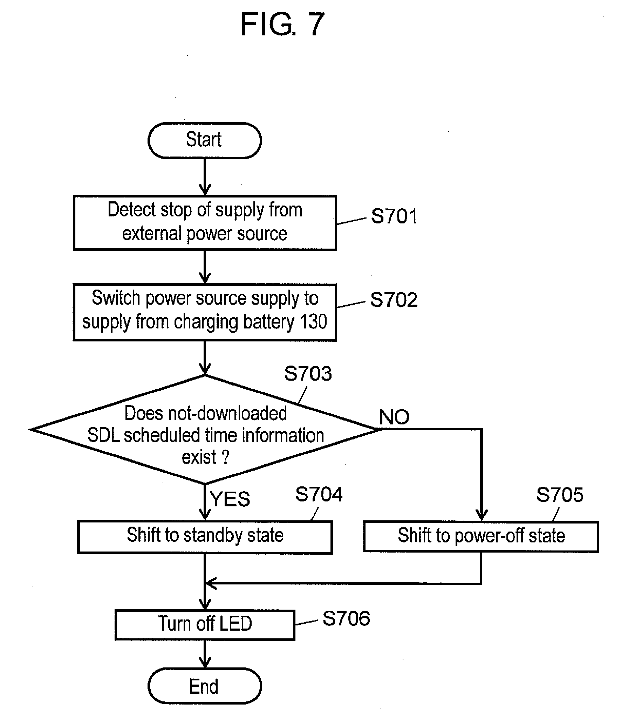

Next, power source control process when the supply from an external power source is stopped is described with reference to Fig. 7. Fig. 7 is a flowchart showing a flow of the power source control process in accordance with the second exemplary embodiment of the present invention.

Firstly, when external power source detection section 131 detects the stop of the supply from the external power source, external power source detection section 131 outputs a notification to power source control section 133 that the external power source is disconnected (step S701). Power source control section 133 that receives the notification that the external power source is disconnected makes the power supply source information be an "internal power source" and outputs a power source switching command to power source switching section 132. Power source switching section 132 switches the supply source of the standby power source from power source 119 to charging battery 130 (step S702). Since processes of the steps later than this step, i.e., steps S703 to S706 are the same as those in steps S402 to S405 described with reference to Fig. 4 in the first exemplary embodiment of the present invention, the description thereof is omitted herein.

When charging battery 130 is not sufficiently charged, the standby power source may not be able to be supplied all the time necessary for downloading. Therefore, according to the remaining amount of charging battery 130, possible amount of SDL is carried out. Downloading of entire software can be carried out at two or more times. In the future, with the trend toward the high performance and high function of the digital broadcast receiving apparatus, it is certain that the size of software for controlling digital broadcast receiving apparatus 20 is more and more increased. Under such circumstances, partial downloading of software is becoming more important for the supply from the standby power source by charging battery 130.

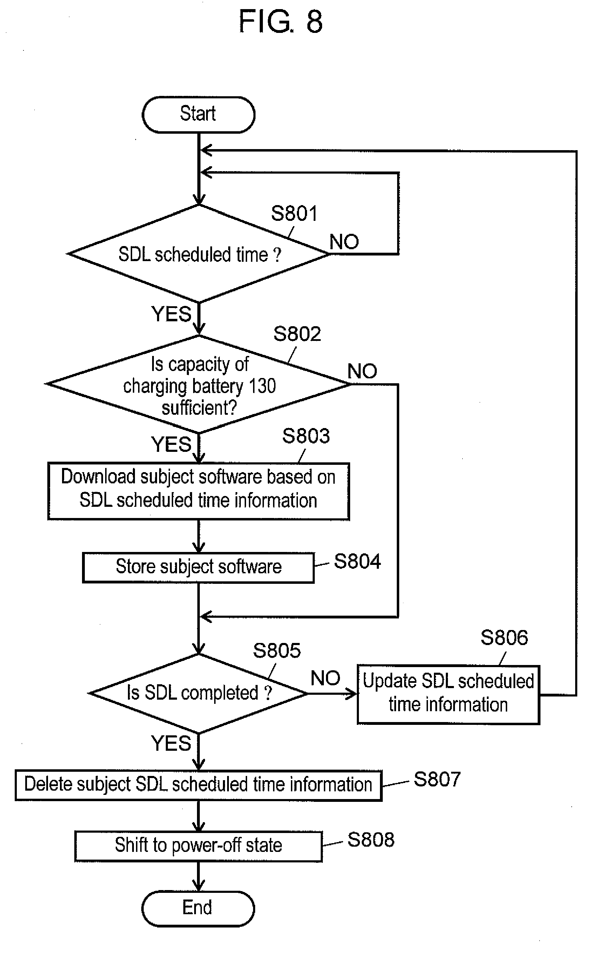

Fig. 8 is a flowchart showing a power source control process when partial downloading is carried out in accordance with the second exemplary embodiment of the present invention. The software update process assumes that digital broadcast receiving apparatus 20 is in a standby state and in a state of an SDL-waiting state in which SDL schedule has been already registered.

Furthermore, in the starting state, an external power source is not input into digital broadcast receiving apparatus 20 and a standby power source is supplied by charging battery 130. In other words, external power source detection section 131 outputs a notification to power source control section 133 that an external power source is disconnected and power supply source information of the power source control section 133 is an "internal power source."

Update control section 113 compares the measurement time input from control section 110 with execution time 204 in the SDL scheduled time information stored in SDL information storage section 115 and determines whether or not the SDL scheduled time comes (step S801). When the time does not reach the scheduled time ("NO" in step S801), the process returns to step S801 and repeats determination until the scheduled time comes.

When update control section 113 determines that the time is an SDL scheduled time ("YES" in step S801), it obtains the battery remaining capacity of charging battery 130 at that time from power source control section 133 via control section 110 and determines whether or not a capacity sufficient to execute entire downloading or partial downloading remains (step S802). When SDL is possible ("YES" in step S802), update control section 113 allows receiving section 101 to select a digital broadcast signal identified by TS identification ID 203 in the SDL scheduled time information stored in SDL information storage section 115 via control section 110. Partial downloading of the subject software is carried out for a time in which charging battery 130 can supply power source (step S803). When the remaining capacity is not sufficient ("NO" in step S802), update control section 113 does not carry out SDL and waits for an opportunity to charge.

Update control section 113 stores the downloaded software in software storage section 116 (step S804). Then, update control section 113 determines whether or not entire downloading of the subject software is completed (step S805). When SDL is completed ("YES" in step S805), SDL scheduled time information corresponding to the subject software that has been downloaded is deleted from SDL information storage section 115 (step S807).

After the above-mentioned processes, update control section 113 outputs a power source turning-off command to control section 110. Control section 110 outputs to storage section 117 that the state is in a power-off state and an SDL-completed state, and it controls power source control section 133 to be a power-off state (step S808). In this state, control section 110 stops the power supply from a standby power source to receiving section 101 or update control section 113, so that the electric power consumption of charging battery 130 is minimized.

On the other hand, in step S805, when SDL is not completed ("NO" in step S805), a download starting position (address information of software program) of next SDL of the SDL scheduled time information stored in SDL information storage section 115 is updated (step S806), the process returns to step S801 and waits for next SDL time. That is to say, in the next partial downloading, downloading may be carried out from the position shown by this starting position information.

During this time, a user connects a power cord for watching television, or turning on the switch of a power source tap, so that an external power source is supplied and charging battery 130 is charged. Then, when next SDL schedule time comes again in a state in which an external power source is not supplied, the same SDL operation as that in the first time is carried out. Then, until SDL is completed, this SDL operation is repeated. Since the same software is transmitted many times, when the battery remaining capacity of charging battery 130 is not sufficient, SDL can be executed at some times.

As mentioned above, according to the second exemplary embodiment of the present invention, even when a user unplugs a power cord of digital broadcast receiving apparatus 20, necessary SDL and software updating can be carried out with the incorporated charging battery 130. Furthermore, even when downloading of the software cannot be finished once because the battery remaining capacity of charging battery 130 is not sufficient, partial downloading can be carried out at several times. That is to say, the update control section downloads a part of software according to the remaining capacity of the charging battery and entire software can be downloaded at a plurality of times. Therefore, in the case of large-size software that takes a long time to be downloaded, SDL and software updating can be carried out without excessively increasing the capacity of charging battery 130.

When digital broadcast receiving apparatus 20, which is connected to other apparatus, is used, and during this time, a power source can be supplied from the other apparatus via a connection line, it is possible to use the power source from the external apparatus as a standby power source instead of charging battery 130. For example, connection with a USB cable, power over Ethernet (registered trademark) cable, an antenna wire (coaxial cable), special-purposed power source wire, or the like, are possible.

Furthermore, the present invention can be easily applied to not only digital broadcast receiving apparatus 20 but also apparatus as a whole having a software updating function based on time information.

### INDUSTRIAL APPLICABILITY

A digital broadcast receiving apparatus having a software updating function and a method of downloading software of the present invention work in conjunction with power source management. Therefore, necessary SDL and software updating can be carried out reliably without being affected by an operation of a main power source switch by a user. The present invention is useful for apparatus having a software updating function.

## Claims

1. A digital broadcast receiving apparatus comprising:
a receiving section for receiving software and download scheduled time information of the software;
a first storage section for storing the received download scheduled time information;
a second storage section for storing the received software;
an update control section for downloading the software corresponding to the stored download scheduled time information, and updating the software stored in the second storage section by using the downloaded software;
an input section through which an operation of a main power source by a user is input;
a power source section for supplying a main power source or a standby power source;
a power source control section for controlling the power source section so as to allow the power source section to supply the main power source or the standby power source and allow the update control section to carry out downloading of the software and update process of the software when the download scheduled time information that has not been downloaded is stored in the first storage section and when the input section detects an operation of turning off the main power source.

2. The digital broadcast receiving apparatus of claim 1, further comprising:
a power source display section lighting up or going off according to the operation of the main power source from the input section;
wherein the power source control section allows the power source display section to go off when the download scheduled time information that has not been downloaded is stored in the first storage section and when the input section detects an operation of turning off the main power source.

3. The digital broadcast receiving apparatus of any one of claims 1 and 2, wherein the power source control section allows the power source section to stop supply from the main power source or the standby power source after completion of downloading of the software and update process of the software.

4. The digital broadcast receiving apparatus of any one of claims 1 and 2, wherein the power source section receives supply of the main power source or the standby power source from an external power source, and the digital broadcast receiving apparatus further comprising:
a charging battery;
an external power source detection section for detecting a stop of power source supply from the external power source, and
a power source switching section for switching between a power source supply from the power source section and a power source supply from the charging battery;
wherein the power source control section allows the power source switching section to switch to power source supply from the charging battery when the external power source detection section detects a stop of the power source supply from the external power source.

5. The digital broadcast receiving apparatus of claim 4, wherein the update control section downloads a part of the software according to a remaining capacity of the charging battery, and downloading of entire software is carried out at a plurality of times.

6. A method of downloading software, the method comprising:
a receiving step for receiving software and download scheduled time information of the software;
a first storing step for storing the received download scheduled time information;
a second storing step for storing the received software;
a detecting step for detecting an operation of turning off a main power source by a user;
a power source supplying step for supplying a main power source or a standby power source when the download scheduled time information that has not been downloaded is stored in the first storing and when the operation of turning off the main power source is detected in the detecting;
an updating step for downloading the software corresponding to the stored download scheduled time information that has not been downloaded, and updating the stored software by using the downloaded software; and
a power source supply stopping step for stopping supply from the main power source or the standby power source after the updating of software is completed in the updating.

7. The method of downloading software of claim 6, further comprising a power source displaying step for allowing a power source display to light up or go off according to an operation of a main power source;
wherein the power source supplying step includes allowing the power source display to go off in the power source displaying step when the download scheduled time information that has not been downloaded is stored in the first storing step and when the operation of turning off the main power source is detected in the detecting step.

8. The method of downloading software of claim 6 or 7, wherein
the power source supplying step receives supply of the main power source or the standby power source from an external power source, and
the method further comprises a stop detecting step for detecting a stop of power source supply from the external power source;
wherein the power source supplying step switches to a power source supply from a charging battery when the stop of power source supply from the external power source is detected in the stop detecting step.

9. The method of downloading software of claim 8, the method further comprising:
a remaining capacity detecting step for detecting a remaining capacity of the charging battery;
wherein in the updating, a part of the software is downloaded according to the remaining capacity of the charging battery detected in the remaining capacity detecting step, and entire software is downloaded at a plurality of times.
